# FASCICULE DE BREVET EUROPEEN

(11) **EP 1 053 279 B1**
(45) Date de publication et mention de la délivrance du brevet: **17.12.2003**
(21) Numéro de dépôt: 99901706.4
(22) Date de dépôt: 03.02.1999
(51) Int. Cl.: C08J 7/12, C08J 7/04, G02B 1/04, C08J 7/06

(54) **PROCEDE DE REVETEMENT D'UN SUBSTRAT EN VERRE ORGANIQUE ET SOLUTION DE TRAITEMENT**
VERFAHREN ZUR BESCHICHTUNG VON ORGANISCHEM GLAS UND BESCHICHTUNGSZUSAMMENSETZUNG
METHOD FOR COATING AN ORGANIC GLASS SUBSTRATE AND TREATING SOLUTION

(30) Priorité: 10.02.1998 FR 9801548
(43) Date de publication de la demande: 22.11.2000
(73) Titulaire: ESSILOR INTERNATIONAL COMPAGNIE GENERALE D'OPTIQUE, 94227 Charenton cédex (FR)
(72) Inventeur: CARON, Pierre, F-75020 Paris (FR)
(74) Mandataire: Catherine, Alain
(86) Numéro de dépôt international: FR9900234
(87) Numéro de publication internationale: WO99041301

(56) Documents cités:
- EP-A- 0 359 026
- WO-A-95/04608
- US-A- 4 338 375
- US-A- 4 611 892
- US-A- 5 104 692
- PATENT ABSTRACTS OF JAPAN vol. 010, no. 123 (C-344), 8 mai 1986 & JP 60 250044 A (YASUO MATSUZAKI), 10 décembre 1985

## Description

La présente invention concerne, d'une manière générale, un procédé de revêtement d'au moins une surface d'un substrat en verre organique transparent qui améliore l'adhésion du revêtement au substrat.

Il est classique, dans le domaine de l'optique ophtalmique, de revêtir les surfaces d'un substrat en verre organique telles qu'une lentille ophtalmique en verre organique, par exemple un verre de lunette, avec des revêtements tels que des revêtements durs anti-abrasion et/ou anti-chocs, pour améliorer la résistance de la lentille ophtalmique obtenue aux rayures et aux chocs.

Un problème associé à ces substrats en verre organique revêtus concerne l'adhésion du revêtement au substrat.

Le brevet US-4.611.892 décrit un procédé qui consiste à traiter un substrat résultant de la polymérisation d'un bis(allyloxycarbonyloxyalcoxy)dihalogènure-phényl alcane et d'un composé allylique bifonctionnel, avec éventuellement un composé (allyl carbonate) avec une solution aqueuse de polyéthylène glycol et d'un hydroxyde de métal alcalin, puis à déposer sur la surface traitée un revêtement dur.

Il serait donc souhaitable de mettre au point un procédé de revêtement d'un substrat en verre organique améliorant l'adhésion du revêtement sur le verre organique et qui puisse s'appliquer à un grand nombre de substrats en verre organique de natures différentes.

On atteint le but ci-dessus selon l'invention, en fournissant un procédé de revêtement d'au moins une surface d'un substrat en verre organique tel qu'une lentille ophtalmique, par exemple un verre de lunette, qui comprend, préalablement au dépôt du revêtement sur la surface du substrat, une étape de traitement comprenant la mise en contact de la surface du substrat avec une solution aqueuse de traitement contenant au moins un agent tensio-actif et ayant un pH acide.
Dans une réalisation recommandée de l'invention, l'étape de traitement avec la solution aqueuse d'agent tensio-actif est suivie par une étape de traitement de la surface avec une solution basique, par exemple une solution aqueuse de soude à 5%.

Le procédé de l'invention peut également comporter, préalablement à l'étape de traitement par la solution aqueuse de tensio-actif, une étape de traitement par plasma, en particulier un plasma classique d'oxygène. L'utilisation d'une telle étape de traitement par plasma du substrat en verre organique s'avère particulièrement intéressante lorsque le verre organique du substrat est un verre à base de polymère acrylique.

Pour ces polymères organiques, l'augmentation de la température de la solution de traitement permet d'augmenter notablement l'adhésion du revêtement. En particulier, lorsque la température de la solution est supérieure ou égale à 70°C, on obtient une excellente adhésion du revêtement sans faire appel à une étape de traitement par plasma.

Bien évidemment, le procédé de revêtement peut comprendre entre les différentes étapes de traitement des étapes de nettoyage avec un alcool et de rinçage à l'eau désionisée. En particulier, il est recommandé, postérieurement à l'étape de traitement par la solution comportant l'agent tensio-actif et préalablement à l'étape de traitement par la solution basique, de procéder à une étape de rinçage, de préférence un rinçage à l'eau désionisée, pour éliminer l'excès de solution contenant l'agent tensio-actif.

En général, pendant l'étape de traitement avec la solution aqueuse d'agent tensio-actif, le substrat est mis en contact avec la solution pendant une durée de 1 à 5 minutes, de préférence à des températures de l'ordre de 30 à 90°C, et mieux encore 40 à 60°C. De préférence, on effectue l'étape de traitement par la solution aqueuse d'agent tensio-actif en appliquant, de façon concomitante, un traitement ultrasons.

Dans une autre réalisation recommandée de l'invention, la solution aqueuse de traitement contenant l'agent tensio-actif comporte des pigments en dispersion et constitue ainsi également un bain de coloration des substrats, en particulier des lentilles ophtalmiques. Dans ce cas, le traitement s'effectue à une température de 90°C environ. On obtient ainsi une excellente adhésion d'un revêtement déposé ultérieurement sur un substrat (lentille) coloré. Cette technique présente deux avantages principaux. D'une part, elle permet de réaliser en une seule étape la coloration et le traitement de surface pour l'adhésion, et, d'autre part, elle permet d'obtenir une excellente adhésion du revêtement alors même que la présence de pigments incorporés en surface du substrat a tendance à dégrader les propriétés d'adhésion des revêtements.

Les agents tensio-actifs utiles dans les solutions aqueuses de traitement selon l'invention, peuvent être tous agents tensio-actifs connus et de préférence des agents tensio-actifs anioniques ou non-ioniques.

Parmi les agents tensio-actifs recommandés pour les solutions de traitement selon l'invention, on peut citer les alkyl sulfates, les alkyl éther sulfates, les alkyl sulfates d'alcoolamine, des alkyl benzène sulfonates et les polyéthylène glycols d'alkyl phényl éther.

Des agents tensio-actifs particulièrement recommandés dans les solutions aqueuses de traitement selon l'invention, sont le lauryl sulfate de sodium (LSNa), le lauryl éther sulfate de sodium (LESNa), le lauryl sulfate de triéthanolamine (LSTEA), le dodécyl benzène sulfonate de sodium (DDBSNa) et le PEG-9 octyl phényl éther (TRITON® x 100).

Un agent tensio-actif particulièrement recommandé, selon l'invention, est le lauryl éther sulfate de sodium (LESNa).

Le ou les agents tensio-actifs présents dans la solution représentent en général 0,01 à 0,1 %, de préférence 0,05 à 0,1 % en poids par rapport au poids total de la solution aqueuse de traitement.

Les solutions aqueuses de traitement préférées selon l'invention contiennent également un polymère hydrophile ou une charge minérale hydrophile colloïdale ou un mélange de ceux-ci.

Parmi les polymères hydrophiles recommandés dans les solutions de traitement selon l'invention, on peut citer les poly(alcool vinylique) (PVA), les polyéthylène glycols (PEG), les polyacrylamides (PAM), les poly(vinyl pyrrolidone) (PVP) et les dérivés de cellulose tels que les hydroxy alkyl celluloses comme l'hydroxy éthyl cellulose et l'hydroxy propyl cellulose, les alkyl hydroxy alkyl celluloses comme la méthyl hydroxy propyl cellulose et les carboxy alkyl celluloses comme la carboxy méthyl cellulose.

Parmi les charges minérales colloïdales hydrophiles convenant dans les solutions aqueuses de traitement selon l'invention, on peut citer les charges de silice, les charges d'alumine et leurs mélanges, en particulier les charges de silice et alumine pyrogénées.

En général, le ou les polymères hydrophiles et/ou les charges minérales colloïdes hydrophiles sont présents dans la solution aqueuse de traitement selon l'invention à raison de 0,001 à 0,05%, de préférence 0,005 à 0,02% en poids par rapport au poids total de la solution aqueuse de traitement.

Des solutions aqueuses de traitement recommandées selon l'invention, sont des solutions qui contiennent un tensio-actif anionique et un polymère hydrophile et/ou une charge minérale colloïdale non-ionique ou cationique.

Des solutions aqueuses de traitement selon l'invention, particulièrement préférées, contiennent en outre un sel d'hydroxylamine et/ou un sel d'hydrazine, tel que par exemple du chlorhydrate d'hydroxylamine et/ou du chlorhydrate d'hydrazine.

Lorsqu'il est présent, ce sel d'hydrazine ou d'hydroxylamine représente 0,02 à 0,1% en poids par rapport au poids total de la solution aqueuse de traitement.

L es solutions aqueuses de traitement selon l'invention ont un pH acide, généralement de 2 à 5. Ce pH acide peut être obtenu par addition, si nécessaire, à la solution, d'un acide, de préférence de l'acide lactique.

En général, la quantité d'acide lactique présent dans la solution aqueuse de traitement représente 0 à 0,01 % en poids par rapport au poids total de la solution aqueuse de traitement

La présente invention concerne donc également une solution aqueuse de traitement pour la mise en oeuvre du procédé de l'invention qui comprend un agent tensio-actif, un polymère hydrophile et/ou une charge minérale colloïdale hydrophile, un sel d'hydrazine et/ou d'hydroxylamine et un acide.

Une solution aqueuse de traitement préférée selon l'invention comprend (les % étant exprimés en poids par rapport au poids total de la solution aqueuse de traitement) :
- 0,01 à 0,1% d'au moins un agent tensio-actif;
- 0,001 à 0,05% d'un polymère hydrophile et/ou d'une charge minérale colloïdale hydrophile;
- 0,02 à 0,1% d'un sel d'hydrazine et/ou d'hydroxylamine; et
- jusqu'à 0,01% d'acide, de préférence l'acide lactique.

Les substrats en verre organique qui peuvent être traités dans le procédé de l'invention, sont tous substrats en verre organique transparent pour lesquels il est nécessaire d'améliorer l'état de surface en vue de faciliter l'adhérence ultérieure d'un traitement et en particulier d'un revêtement anti-abrasion.

Parmi ces substrats, on peut citer les substrats à base de polymère (méth)allylique, les substrats à base de polymère (méth)acrylique, les substrats à base de polymère thio(méth)acrylique, les substrats à base de poly(thio)uréthane et les substrats à base de polycarbonate thermoplastique.

Les substrats préférentiels sont de type (méth)allylique, (méth)acrylique, et poly(thio)uréthane.

Une première famille de substrats est constituée par ceux obtenus à partir de compositions polymérisables comprenant des monomères ou prépolymères (méth)allyliques dérivés du bisphénol-A, en particulier le bis allyl carbonate de bisphénol-A.

Ce dernier peut être utilisé seul ou en mélange avec d'autres monomères copolymérisables, en particulier avec du bis allyl carbonate de diéthylène glycol.

Des substrats plus particulièrement recommandés, ainsi que leur procédé d'obtention figurent dans les documents de brevet EP 224123 et FR 2703056.

Une seconde famille de substrats est constituée par ceux obtenus à partir de compositions polymérisables comprenant des monomères ou prépolymères (méth)acryliques dérivés du bisphénol-A, en particulier le diméthacrylate de bis phénol-A ou le diméthacrylate de poly(éthoxy)bis phénol-A.

De tels substrats sont décrits, entre autres, dans le brevet EP 605293.

Une troisième famille de substrats est constituée par ceux obtenus à partir de compositions renfermant au moins un composé polythiol et au moins un composé polyisocyanate qui conduisent à un substrat polythiouréthane.

De tels substrats ainsi que leur procédé d'obtention sont décrits plus particulièrement dans les brevets US 4 689 387 et US 4 775 733.

Pour faciliter le démoulage de tels substrats, il est possible d'incorporer des agents de démoulage internes.

De tels agents sont décrits dans le brevet EP 271839.

Les agents de démoulage préférés sont des phosphates acides tels que le dibutyl phosphate.

La présence de l'agent de démoulage interne a pour conséquence une diminution de l'adhérence des traitements, en particulier des revêtements, déposés ultérieurement sur le substrat.

L'invention trouve donc un intérêt particulier dans le cas de substrats contenant de tels agents de démoulage.

Une quatrième famille est celle constituée par les matériaux polycarbonate (thermoplastiques).

Les revêtements qui peuvent être déposés sur les substrats en verre organique prétraité, selon l'invention, sont tous revêtements classiquement utilisés dans le domaine de l'optique ophtalmique tels que des revêtements durs anti-abrasion et/ou anti-chocs.

Parmi les revêtements anti-abrasion recommandés dans la présente invention, on peut citer les revêtements obtenus à partir de compositions à base d'hydrolysat de silane, en particulier d'hydrolysat d'époxysilane, par exemple celles décrites dans le brevet EP 0614957, ou des compositions à base de dérivés (méth)acryliques.

Une composition de revêtements anti-abrasion particulièrement recommandée dans le procédé selon l'invention, est une composition comprenant un hydrolysat de γ-glycidoxy propyl triméthoxysilane, éventuellement un hydrolysat de diméthyl diéthoxysilane, de la silice colloïdale et de l'acétyl acétonate d'aluminium.

Un autre revêtement envisageable est un revêtement à base de polyuréthane, en particulier du latex de polyuréthane.

Le dépôt du revêtement sur la surface du substrat en verre organique traitée selon l'invention se fait de manière classique, par application d'une solution de la composition de revêtement, puis durcissement classique de cette composition.

D'une manière générale, le procédé selon l'invention permet d'obtenir une excellente adhésion des revêtements déposés ultérieurement sur le substrat en matière organique prétraité, et en particulier des revêtements eux-mêmes en matière organique.

Le procédé permet d'éviter tout traitement d'avivage mécanique de surface qui serait préjudiciable à la transparence.

En outre, il conduit à des substrats revêtus, en particulier des lentilles ophtalmiques présentant un excellent aspect cosmétique.

La suite de la description se réfère aux figures annexées, qui représentent respectivement :
Figure 1 - le niveau d'adhésion du revêtement sur divers substrats en verre organique traités avec des solutions aqueuses de traitement selon l'invention, comportant différents tensio-actifs;
Figure 2 - un graphe du niveau d'adhésion d'un revêtement sur divers substrats en verre organique traités par le procédé de la présente invention avec différentes solutions aqueuses de traitement selon l'invention, comportant des polymères hydrophiles différents;
Figure 3 - un graphe du niveau d'adhésion du revêtement pour divers substrats en verre organique traités par le procédé selon l'invention, avec deux solutions aqueuses de traitement selon l'invention contenant du lauryl sulfate de sodium comme agent tensio-actif et de l'hydroxy éthyl cellulose comme polymère hydrophile, mais dans des concentrations différentes;
Figure 4 - un graphe du niveau d'adhésion du revêtement sur divers substrats en verre organique traités par le procédé selon l'invention avec diverses autres solutions aqueuses de traitement selon l'invention comportant un colloïde minéral;
Figure 5 - un graphe du niveau d'adhésion du revêtement sur divers substrats en verre organique traités par le procédé selon l'invention avec diverses solutions aqueuses de traitement selon l'invention renfermant du chlorhydrate d'hydrazine ou d'hydroxylamine.

Dans les exemples suivants, sauf indications contraires, toutes les parties et pourcentages sont exprimés en poids.

On a préparé à partir d'une solution-mère diluée 100 fois, des solutions aqueuses de traitement selon l'invention T14 à T34, ayant les compositions indiquées dans le tableau I ci-dessous.

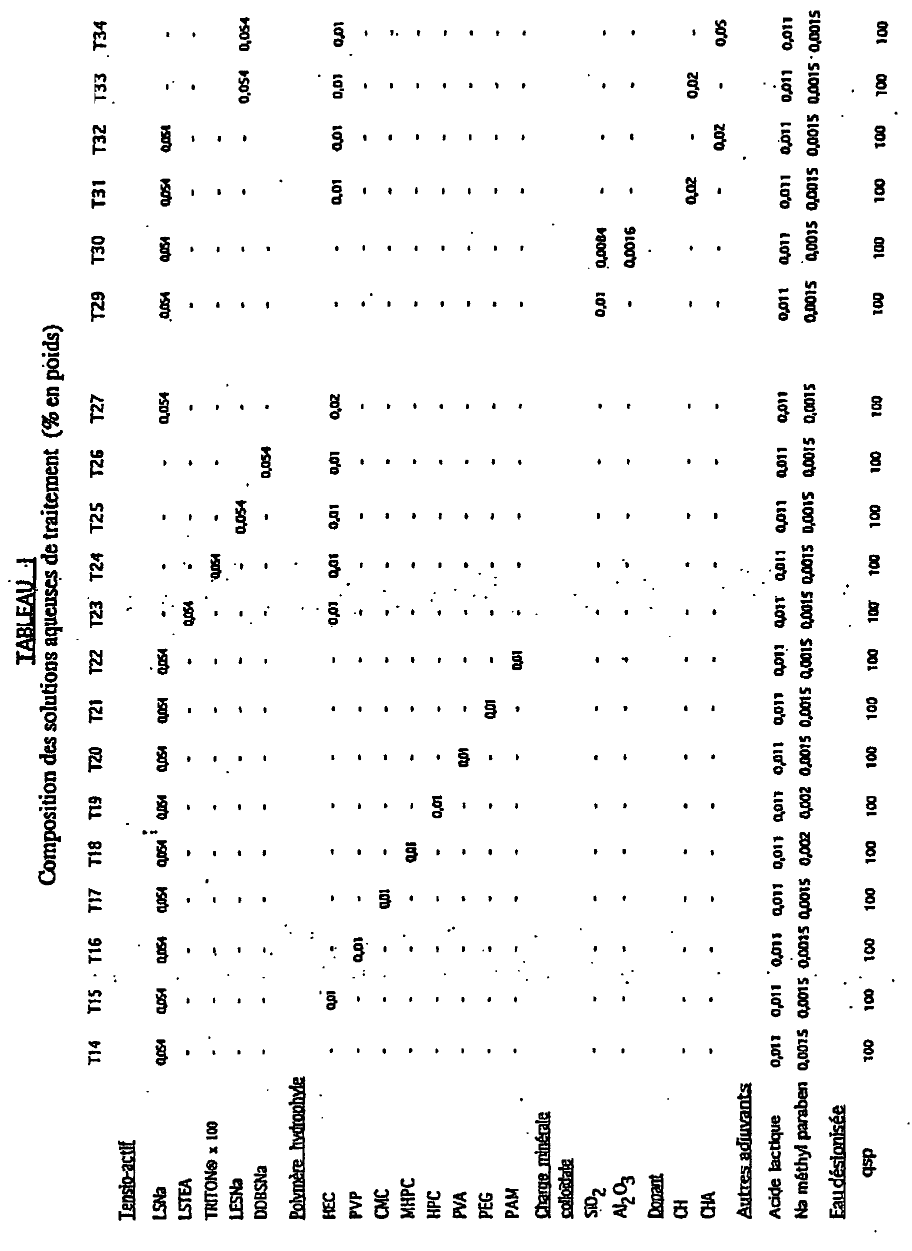

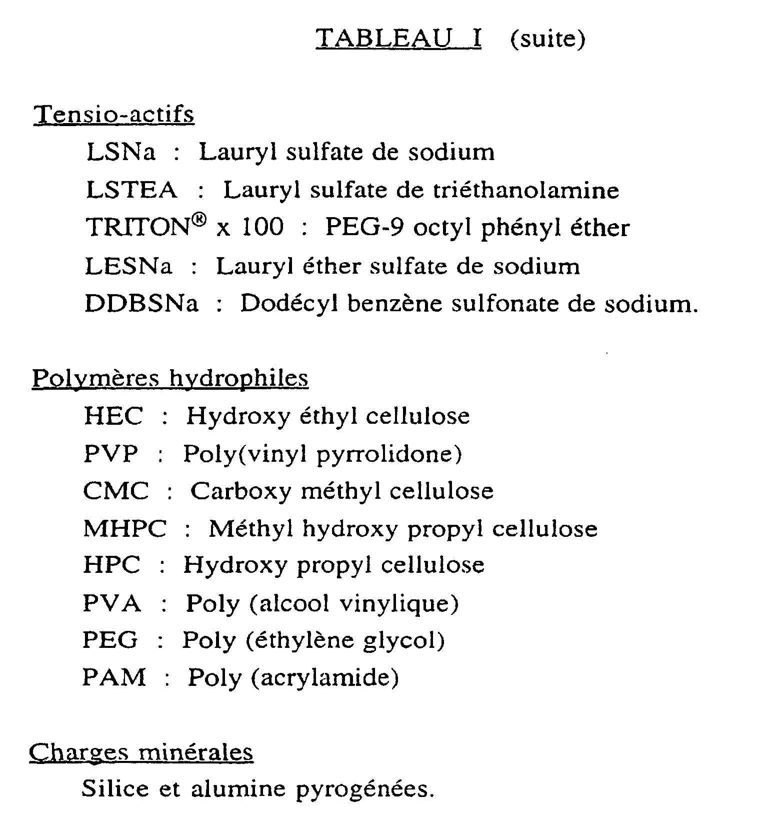

Les différents substrats en verre organique traités sont définis ci-dessous :
**Le substrat A** est obtenu par polymérisation thermique d'une composition polymérisable renfermant :
. 91% de bis allyl carbonate de bisphénol A, commercialisé par la Société PPG sous la dénomination CR 73® ou HIRI1®.
. 7% de bis allyl carbonate de diéthylène glycol, commercialisé par la Société PPG sous la dénomination CR 39® et une quantité suffisante de diisopropyl peroxy dicarbonate comme catalyseur de polymérisation.

**Le substrat B** est obtenu par photopolymérisation d'une composition polymérisable renfermant :
. 98% en poids de D 121® [tétraéthoxy bis phénol A di(méth)acrylate, commercialisé par la Société AKZO].
. 2% de 3-méthyl 2-butène 1-ol et un photoamorceur CGI 1700® commercialisé par la Société CIBA GEIGY (0,1% en poids).

La composition est coulée dans un moule en verre minéral transparent, puis irradiée sous une lampe à mercure pendant 5 minutes. Puis la lentille est soumise à un recuit d'une heure à 120°C.
L'article final, après démoulage, présente une épaisseur au centre de 2 mm.
**Le substrat C** est obtenu à partir d'un mélange comprenant, comme seuls monomères polymérisables :
. le m-xylylène diisocyanate (XDI) 769,2 g.
. le pentaérythritol tétrakis (3-mercapto propionate) (PETMP) 1000 g, et une quantité appropriée de dibutyl dilaurate d'étain (50-5000 ppm, préférentiellement 2500-5000 ppm).

On soumet ensuite à une polymérisation thermique de 24 heures, débutant entre 25 et 50°C, suivie d'une montée en température jusqu'à 100-135°C, puis une diminution de la température jusqu'à 50-75°C. La lentille ophtalmique est alors démoulée. Elle présente une épaisseur au centre inférieure à 3 mm.
**Le substrat D** est obtenu de la même façon que le substrat C, mais la composition polymérisable engendrant ce substrat comporte un agent de démoulage interne constitué du mélange de composés suivants :
. 0,2% de dibutylphosphate (origine : JOHOKO : identifié comme étant un mélange de 55% de poids de dibutyl phosphate et 45% de mono butyl phosphate).
. 0,06% de Zelec® UN (C₈-C₁₆ ester acide phosphorique).

(Les pourcentages en agents de démoulage sont exprimés en poids par rapport au poids total XDI + PETMP).
**Le substrat E** est un substrat obtenu par polymérisation de la composition polymérisable suivante, décrite dans la demande de brevet WO 95/10790.

| **Ingrédients de base** | **Parties en poids** |
|---|---|
| Diméthacrylate d'éthoxy bis phénol A contenant 2,5 motifs éthoxy | 43,5 |
| Poly(éthylène glycol) de masse moléculaire 66 terminé aux deux extrémités par du méthacrylate | 21,0 |
| 1,3-diisopropényl benzène | 6,0 |
| 2-phénoxyéthyl méthacrylate | 20,5 |
| Poly(éthylène glycol) de masse molaire 200 à terminaison benzoate aux deux extrémités | 8,7 |
| Triphényl phosphite | 0,3 |
| | |
| Initiateur | |
| Diisopropyl peroxy dicarbonate | 1,5 |
| Tert-butyl peroxy 2-éthyl carbonate | 0,5 |

La composition polymérisable est coulée dans un moule. Le moule est placé dans un four à circulation d'air et la composition est durcie en utilisant le cycle de durcissement suivant.

| Heures cumulées | Température du four °C |
|---|---|
| 0 | 34 |
| 24 | 36 |
| 32 | 44 |
| 34 | 46 |
| 36 | 48 |
| 38 | 50 |
| 40 | 54 |
| 42 | 58 |
| 44 | 64 |
| 46 | 69 |
| 48 | 85 |
| 49 | 105 |
| 49,5 | 130 |
| 50,5 | 130 (fin de cycle) |

On laisse le polymérisat refroidir dans le four jusqu'à environ 80°C, puis on le retire et le démoule.

Les différents substrats ont été soumis, préalablement au dépôt du revêtement, au traitement ci-après.

En ce qui concerne les substrats C, D et A, les substrats étaient initialement prénettoyés manuellement à l'alcool, trempés pendant 4 minutes dans la solution aqueuse de traitement selon l'invention maintenue à une température de 50°C, tout en étant soumis à un traitement ultrasons, rincés par trempage dans un bain d'eau désionisée, puis traités successivement dans un bain de soude à 5%, et dans un bain d'eau désionisée, puis nettoyés dans un bain d'alcool.

Les substrats E et B, quant à eux, étaient soumis au même traitement que précédemment, mais comportant après le premier pré-nettoyage à l'alcool, un traitement supplémentaire par plasma d'oxygène (O2) (plasma micro-onde 1200 W, de 5 minutes, débit 200 ml/mn).

A titre de comparaison, on a soumis les mêmes substrats, préalablement au dépôt du revêtement, à des traitements analogues à ceux décrits ci-dessus, mais ne comportant pas d'étape de traitement avec une solution aqueuse selon l'invention. Les substrats ayant subi ce traitement sont identifiés par REF sur les figures.

Tous les substrats sont ensuite revêtus d'une composition de revêtement anti-abrasion dure, correspondant à l'exemple 3 du brevet EP-0 614 957 et comme indiqué dans cet exemple.

Plus particulièrement, on a préparé une solution de revêtement en faisant tomber goutte à goutte 8,05 parties d'acide chlorhydrique 0,1 N dans une solution contenant 224 parties de γ-glycidoxy propyl triméthoxy silane et 120 parties de diméthyl diéthoxy silane. La solution hydroxylée est agitée 24 heures à température ambiante, puis on ajoute 718 parties de silice colloïdale à 30% dans le méthanol, 15 parties d'acétyl acétonate d'aluminium et 44 parties d'éthyl cellosolve. On ajoute une petite quantité d'agent tensio-actif. L'extrait sec théorique de la composition renferme de l'ordre de 13% en matière solide provenant du diméthyl diéthoxy silane.

La composition est appliquée sur les substrats par revêtement au trempé (dip coating), et les substrats revêtus sont ensuite soumis à une précuisson de 15 minutes à 60°C et à un étuvage à 110°C pendant 3 heures.

On récupère alors les substrats revêtus du revêtement anti-abrasion qui sont alors soumis à des essais d'adhésion.

On a mesuré l'adhésion des revêtements sur les substrats suivant la norme AFNOR 76 SNT 30038 qui consiste à entailler les revêtements à l'aide d'un cuter, suivant un réseau quadrillé de lignes d'incision, à appliquer un ruban adhésif au revêtement ainsi quadrillé et à essayer de l'arracher à l'aide de celui-ci.

L'adhésion des revêtements est mesurée sur des substrats à sec et après qu'ils aient été plongés pendant 30 minutes dans un bain d'eau bouillante, retirés du bain puis ramenés à la température ambiante.

Les résultats sont considérés comme bons lorsque les bords des incisions pratiquées demeurent parfaitement lisses et aucun des carrés qu'elles délimitent ne se détachent.

On note alors le rendement (pourcentage de verres (substrats) bons au test à sec, et s'ils sont tous bons à sec, après 1/2 heure d'eau bouillante).

Si les substrats passent avec succès le test d'1/2 heure à l'eau bouillante, les mêmes verres sont à nouveau plongés pendant 30 minutes dans un bain d'eau bouillante, retirés du bain, puis ramenés à température ambiante.

On pratique alors le même test d'adhérence que décrit ci-dessus. On note les rendements (pourcentage de verres bons) après 1 heure d'eau bouillante.

Le niveau d'adhésion a été déterminé comme indiqué dans le tableau II ci-après.

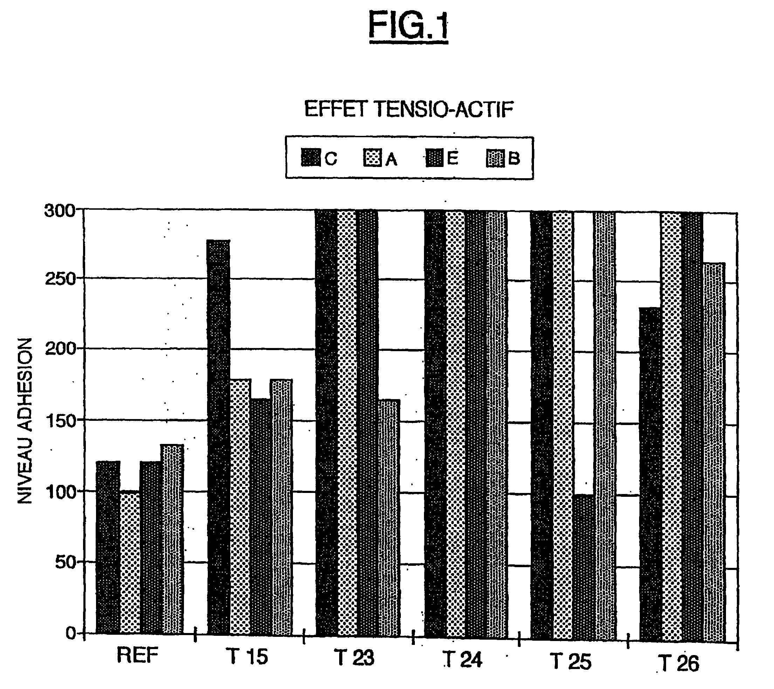

Les résultats de ces essais d'adhérence sont indiqués aux figures 1 à 5.

**TABLEAU II**

| **TEST** | **NIVEAU** | **RENDEMENT : % de verres bons (note 0 à 1)** |
|---|---|---|
| **1H E.B.** | **300** | 100% des verres sont bons après 1H E.B. |
| | **280** | |
| | **260** | 60% des verres sont bons après 1H E.B. |
| | 240 | |
| | **220** | |
| **1/2H E.B.** | **200** | 100% des verres sont bons après 1/2H EB. |
| | **180** | |
| | **160** | 60% des verres sont bons après 1/2H E.B. |
| | 140 | |
| | **120** | |
| **Sec** | **1 0 0** | 100% des verres sont bons à sec. |
| | **80** | |
| | **60** | 60% des verres sont bons à sec |
| | 40 | |
| | 20 | |
| | 0 | 0% des verres sont bons à sec |

La figure 1 montre que le traitement à l'aide d'une solution aqueuse contenant un agent tensio-actif selon l'invention conduit à une adhérence du revêtement sur le substrat en verre organique meilleure par rapport à des substrats de référence qui n'ont pas été traités avec une solution selon l'invention.

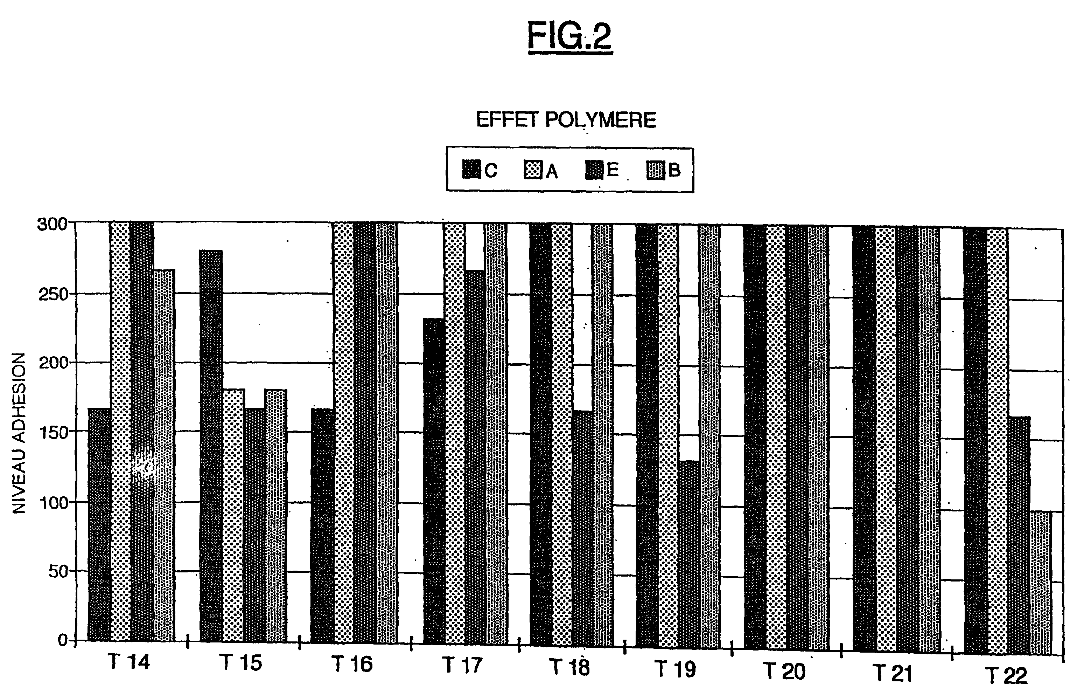

La figure 2 montre les résultats d'adhérence obtenus avec des solutions de traitement contenant divers polymères hydrophiles et que l'on peut classer les polymères testés de la façon suivante : PVA>PEG>HPC, MHPC>PAM>PVP>CMC.

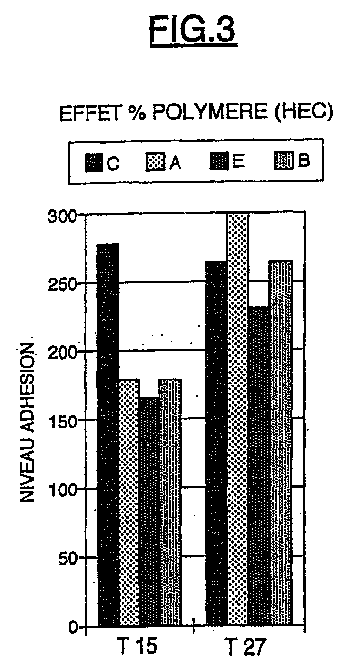

La figure 3 montre que l'accroissement du taux de polymères hydrophiles dans la solution aqueuse de traitement accroît d'une manière générale le niveau d'adhésion.

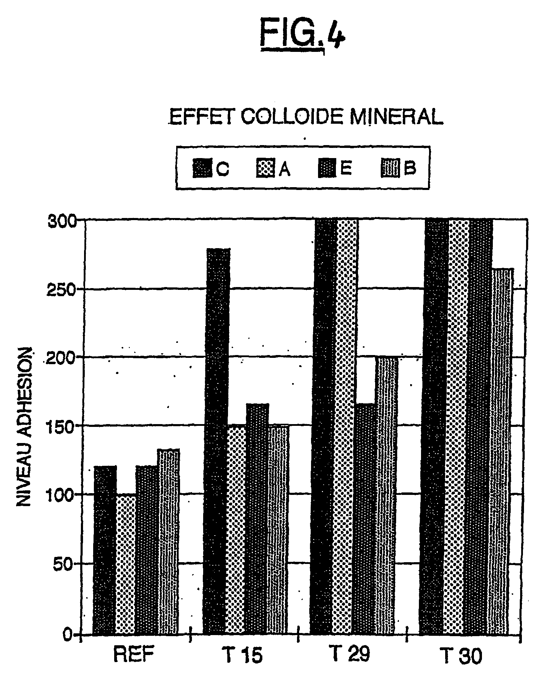

La figure 4 montre que l'emploi de charges minérales colloïdales hydrophiles à la place des polymères hydrophiles, ne modifie pas sensiblement l'effet de la solution de traitement vis-à-vis de l'adhésion du revêtement.

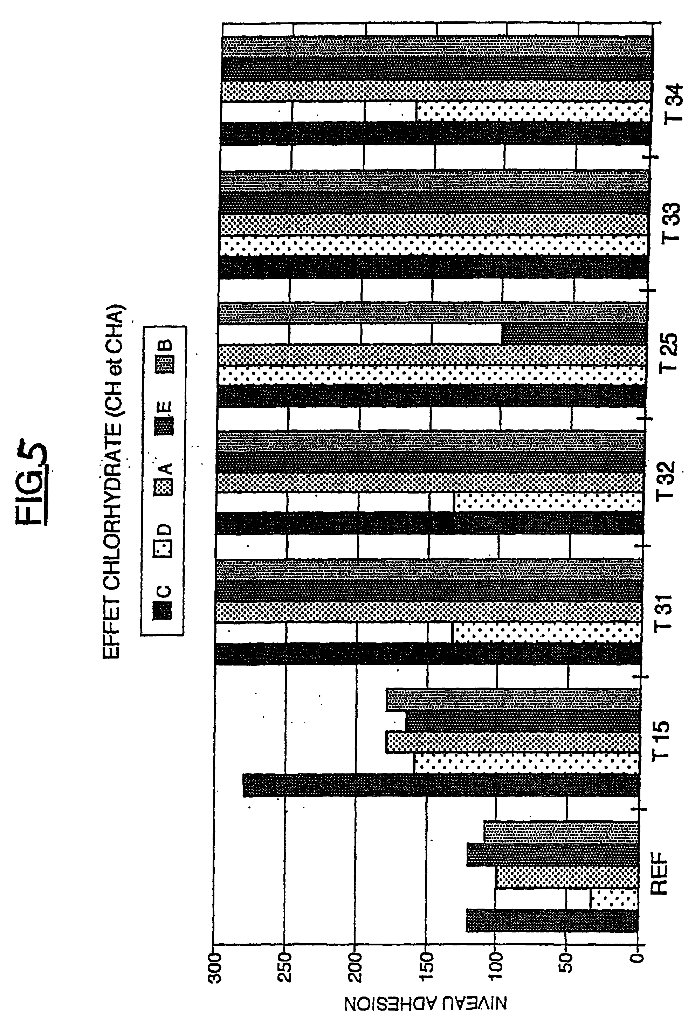

La figure 5 montre que les meilleurs résultats sont obtenus pour les solutions aqueuses de traitement selon l'invention contenant en outre un dopant choisi parmi les sels d'hydrazine et d'hydroxylamine.

## Revendications

1. Procédé de revêtement d'au moins une surface d'un substrat en verre organique, **caractérisé en ce qu'**il comprend, préalablement au dépôt du revêtement sur la surface du substrat, une étape de traitement comprenant la mise en contact de la surface du substrat avec une solution aqueuse de traitement contenant au moins un agent tensio-actif et ayant un pH acide.

2. Procédé selon la revendication 1, **caractérisé en ce que** le pH de la solution aqueuse de traitement contenant l'agent tensio-actif varie de 2 à 5.

3. Procédé selon la revendication 1 ou 2, **caractérisé en ce que** le pH acide de la solution aqueuse de traitement contenant l'agent tensio-actif est réglé par addition d'acide lactique.

4. Procédé selon la revendication 3, **caractérisé en ce que** la quantité d'acide lactique présent dans la solution aqueuse de traitement contenant l'agent tensio-actif est de 0 à 0,01 % en poids par rapport au poids total de la solution.

5. Procédé selon . l'une quelconque des revendications précédentes, **caractérisé en ce qu'**il comprend, postérieurement à l'étape de traitement avec la solution aqueuse d'agent tensio-actif, une étape de traitement de la surface avec une solution basique.

6. Procédé selon la revendication 5, **caractérisé en ce que** la solution basique est une solution aqueuse de soude à 5%.

7. Procédé selon la revendication 5 ou 6, **caractérisé en ce qu'**il comprend, postérieurement à l'étape de traitement par la solution comportant l'agent tensio-actif et préalablement à l'étape de traitement par la solution basique, une étape de rinçage pour éliminer l'excès de solution comportant l'agent tensio-actif.

8. Procédé selon la revendication 7, **caractérisé en ce que** l'étape de rinçage est une étape de rinçage à l'eau désionisée.

9. Procédé selon l'une quelconque des revendications précédentes, **caractérisé en ce qu'**il comprend, préalablement à l'étape de traitement avec la solution aqueuse d'agent tensio-actif, une étape de prétraitement par plasma.

10. Procédé selon l'une quelconque des revendications précédentes, **caractérisé en ce que** l'agent tensio-actif est choisi parmi les tensio-actifs anioniques ou non-ioniques.

11. Procédé selon la revendication 10, **caractérisé en ce que** l'agent tensio-actif est choisi parmi le lauryl sulfate de sodium, le lauryl éther sulfate de sodium, le lauryl sulfate de triéthanolamine, le dodécyl benzène sulfonate de sodium et le PEG-9 octyl phényl éther.

12. Procédé selon l'une quelconque des revendications 1 à 10, **caractérisé en ce que** l'agent tensio-actif est le lauryl éther sulfate de sodium.

13. Procédé selon l'une quelconque des revendications précédentes, **caractérisé en ce que** l'agent tensio-actif représente 0,01 à 0,1% en poids par rapport au poids total de la solution aqueuse de traitement.

14. Procédé selon l'une quelconque des revendications précédentes, **caractérisé en ce que** la solution aqueuse de traitement contenant au moins un agent tensio-actif contient un polymère hydrophile ou une charge minérale colloïdale hydrophile ou un mélange de ceux-ci.

15. Procédé selon la revendication 14, **caractérisé en ce que** le polymère hydrophile est choisi parmi les poly(alcool vinylique), les polyéthylène glycols, les polyacrylamides, les poly(vinyl pyrrolidone) et les dérivés de cellulose.

16. Procédé selon la revendication 15, **caractérisé en ce que** les dérivés de cellulose sont choisis parmi les hydroxy alkyl celluloses, les alkyl hydroxy alkyl celluloses et les carboxy alkyl celluloses.

17. Procédé selon la revendication 16, **caractérisé en ce que** le dérivé de cellulose est une hydroxy éthyl cellulose, une hydroxy propyl cellulose, une méthyl hydroxy propyl cellulose ou une carboxy méthyl cellulose.

18. Procédé selon l'une quelconque des revendications 14 à 17, **caractérisé en ce que** la charge minérale colloïdale hydrophile est choisie parmi les silices pyrogénées, les alumines pyrogénées et leurs mélanges.

19. Procédé selon la revendication 14, **caractérisé en ce que** l'agent tensio-actif est un tensio-actif anionique et la charge minérale une charge minérale colloïdale non-ionique.

20. Procédé selon l'une quelconque des revendications 14 à 19, **caractérisé en ce que** le polymère hydrophile et/ou la charge minérale colloïdale représentent 0,001 à 0,05% en poids, par rapport au poids total de la solution aqueuse de traitement contenant l'agent tensio-actif.

21. Procédé selon la revendication 20, **caractérisé en ce que** le polymère hydrophile et/ou la charge minérale colloïdale représentent 0,005 à 0,02% en poids.

22. Procédé selon l'une quelconque des revendications précédentes, **caractérisé en ce que** la solution aqueuse de traitement contenant l'agent tensio-actif contient un sel d'hydroxylamine et/ou un sel d'hydrazine.

23. Procédé selon la revendication 22, **caractérisé en ce que** le sel d'hydroxylamine et/ou d'hydrazine est un chlorhydrate.

24. Procédé selon la revendication 22 ou 23, **caractérisé en ce que** le sel d'hydroxylamine et/ou le sel d'hydrazine représentent 0,02 à 0,1% en poids par rapport au poids total de la solution aqueuse de traitement contenant l'agent tensio-actif.

25. Procédé selon l'une quelconque des revendications précédentes, **caractérisé en ce que** la solution aqueuse de traitement contenant l'agent tensio-actif comprend un pigment en dispersion.

26. Procédé selon l'une quelconque des revendications précédentes, **caractérisé en ce que** le substrat est choisi parmi les polythiouréthanes, les polymères (méth)allyliques, les polymères (méth)acryliques et les polycarbonates thermoplastiques.

27. Procédé selon l'une quelconque des revendications précédentes, **caractérisé en ce que** le revêtement est un vernis dur anti-abrasion ou anti-choc.

28. Procédé selon la revendication 27, **caractérisé en ce que** le revêtement est à base d'hydrolysat d'époxysilane.

29. Procédé selon l'une quelconque des revendications précédentes, **caractérisé en ce que** le substrat est une lentille ophtalmique.

30. Procédé selon la revendication 29, **caractérisé en ce que** la lentille est un verre de lunette.

31. Solution aqueuse de traitement, **caractérisée en ce qu'**elle comprend un agent tensio-actif, un polymère hydrophile et/ou une charge minérale colloïdale hydrophile, un sel d'hydrazine et/ou d'hydroxylamine, et un acide.

32. Solution aqueuse selon la revendication 31, **caractérisée en ce qu'**elle comprend, par rapport au poids total de la solution :
- 0,01 à 0,1% d'au moins un agent tensio-actif ;
- 0,001 à 0,05% du polymère hydrophile et/ou de la charge minérale colloïdale hydrophile ;
- 0,02 à 0,1% d'un sel d'hydrazine et/ou d'hydroxylamine ; et
- jusqu'à 0,01% d'acide.

33. Solution aqueuse de traitement selon la revendication 31 ou 32, **caractérisée en ce que** l'acide est l'acide lactique.

34. Solution aqueuse de traitement selon l'une quelconque des revendications 31 à 32, **caractérisée en ce que** l'agent tensio-actif est choisi parmi les agents tensio-actifs anioniques ou non-ioniques.

35. Solution aqueuse de traitement selon la revendication 34, **caractérisée en ce que** l'agent tensio-actif est choisi parmi le lauryl sulfate de sodium, le lauryl éther sulfate de sodium, le lauryl sulfate de triéthanolamine, le dodécyl benzène sulfonate de sodium et le PEG-9 octyl phényl éther.

36. Solution aqueuse de traitement selon l'une quelconque des revendications 31 à 35, **caractérisée en ce que** le polymère hydrophile est choisi parmi les polyalcools vinyliques, les polyéthylènes glycols, les polyacrylamides, les polyvinyl pyrrolidones et les dérivés de cellulose.

37. Solution aqueuse selon l'une quelconque des revendications 31 à 36, **caractérisée en ce que** la charge minérale colloïdale hydrophile est choisie parmi les silices pyrogénées, les alumines pyrogénées et leurs mélanges.

38. Solution aqueuse de traitement selon l'une quelconque des revendications 31 à 37, **caractérisée en ce que** le sel d'hydroxylamine et/ou d'hydrazine est un chlorhydrate.

39. Solution aqueuse de traitement selon l'une quelconque des revendications 31 à 38, **caractérisée en ce qu'**elle renferme un pigment en dispersion.

## Patentansprüche

1. Verfahren zur Beschichtung von zumindest einer Fläche eines Substrates aus organischem Glas, **dadurch gekennzeichnet, daß** es umfaßt, vorangehend zur Auftragung der Beschichtung an der Fläche des Substrates einen Behandlungsschritt, der das in Berührungbringen der Fläche des Substrates mit einer wässrigen Behandlungslösung umfaßt, die zumindest ein Tensid enthält und einen sauren PH-Wert aufweist.

2. Verfahren nach Anspruch 1, **dadurch gekennzeichnet, daß** der PH-Wert der wässrigen Behandlungslösung, die das Tensid umfaßt, zwischen zwei und fünf variiert.

3. Verfahren nach Anspruch 1 oder 2, **dadurch gekennzeichnet, daß** der saure PH-Wert der wässrigen Behandlungslösung, die das Tensid enthält, eingestellt ist oder wird durch Hinzufügen von Milchsäure.

4. Verfahren nach Anspruch 3, **dadurch gekennzeichnet, daß** die Menge an Milchsäure, die in der wässrigen Behandlungslösung vorliegt, die das Tensid enthält, zwischen 0 und 0,01 Gewichtsprozent mit Bezug auf das Gesamtgewicht der Lösung ausmacht.

5. Verfahren nach einem der vorangegangenen Ansprüche, **dadurch gekennzeichnet, daß** es umfaßt, anschließend an den Behandlungsschritt mit der wässrigen Tensidlösung einen Behandlungsschritt der Fläche oder Oberfläche mit einer basischen Lösung.

6. Verfahren nach Anspruch 5, **dadurch gekennzeichnet, daß** die basische Lösung eine wässrige Sodalösung von 5 % ist.

7. Verfahren nach Anspruch 5 oder 6, **dadurch gekennzeichnet, daß** es umfaßt, anschließend an den Schritt der Behandlung mit der Lösung, die das Tensid enthält und vorangehend zu dem Schritt der Behandlung mit der basischen Lösung einen Schritt des Spülens, um einen Überschuß an Tensid enthaltender Lösung zu eliminieren.

8. Verfahren nach Anspruch 7, **dadurch gekennzeichnet, daß** der Schritt des Spülens ein Schritt des Spülens mit entionisiertem Wasser ist.

9. Verfahren nach einem der vorangegangenen Ansprüche, **dadurch gekennzeichnet, daß** es umfaßt, vorangehend zu dem Schritt der Behandlung mit der wässrigen Lösung mit Tensid einen Schritt der Vorbehandlung mittels Plasma.

10. Verfahren nach einem der vorangegangenen Ansprüche, **dadurch gekennzeichnet, daß** das Tensid ausgewählt ist unter anionischen oder nicht-ionischen Tensiden.

11. Verfahren nach Anspruch 10, **dadurch gekennzeichnet, daß** das Tensid ausgewählt ist unter Natriumlaurylsulfat, Natriumlaurylethersulfat, Triethanolamin-laurylsulfat, Natriumdodecylbenzolsulfonat und PEG-9-Oktylphenylether.

12. Verfahren nach einem der Ansprüche 1 - 10, **dadurch gekennzeichnet, daß** das Tensid Natriumlaurylethersulfat ist.

13. Verfahren nach einem der vorangegangenen Ansprüche, **dadurch gekennzeichnet, daß** das Tensid 0,01 - 0,1 Gewichtsprozent mit dem Bezug auf das Gesamtgewicht der wässrigen Behandlungslösung ausmacht.

14. Verfahren nach einem der vorangegangenen Ansprüche, **dadurch gekennzeichnet, daß** die wässrige Behandlungslösung, die zumindest ein Tensid enthält, ein hydrophiles Polymer oder einen hydrophile colloidalen mineralischen Füllstoff oder eine Mischung derselben enthält.

15. Verfahren nach Anspruch 14, **dadurch gekennzeichnet, daß** das hydrophile Polymer ausgewählt ist unter den vinylischen Polyalkoholen, den Polyethylenglykolen, den Polyacrylamiden, den Poly(vinylpyrrolidonen) und den Cellulosederivaten.

16. Verfahren nach Anspruch 15, **dadurch gekennzeichnet, daß** die Cellulosederivate ausgewählt sind unter den Hydroxyalkylcellulosen, den Alkylhydroxyalkylcellulosen und den Carboxyalkylcellulosen.

17. Verfahren nach Anspruch 16, **dadurch gekennzeichnet, daß** das Cellulosederviat eine Hydroxyethylcellulose, eine Hydroxypropylcellulose, eine Methylhydroxypropylcellulose oder eine Carboxymenthylcellulose ist.

18. Verfahren nach einem der Ansprüche 14 - 17, **dadurch gekennzeichnet, daß** der hydrophile callodiale Füllstoff ausgewählt ist unter den pyrogenen Kieselerden, den pyrogenen Aluminiumoxiden und deren Mischungen.

19. Verfahren nach Anspruch 14, **dadurch gekennzeichnet, daß** das Tensid ein anionisches Tensid und der mineralische Füllstoff ein colloidaler nicht-ionischer Füllstoff ist.

20. Verfahren nach einem der Ansprüche 14 - 19, **dadurch gekennzeichnet, daß** das hydrophyle Polymer und /oder der colloidale Mineralfüllstoff, 0,001 - 0,5 Gewichtsprozent mit Bezug auf das Gesamtgewicht der wässrigen Behandlungslösung, die das Tensid enthält darstellt bzw. darstellen.

21. Verfahren nach Anspruch 20, **dadurch gekennzeichnet, daß** das hydrophile Polymer und/oder der colloidale Mineralfüllstoff 0,005 - 0,02 Gewichtsprozent darstellt bzw. darstellen.

22. Verfahren nach einem der vorangegangenen Ansprüche, **dadurch gekennzeichnet, daß** die wässrige Behandlungslösung, die das Tensid enthält ein Hydroxylaminsalz und/oder ein Hydrazinsalz enthält.

23. Verfahren nach Anspruch 22, **dadurch gekennzeichnet, daß** das Hydroxylaminund/oder das Hydrazinsalz ein Chlorhydrat ist.

24. Verfahren nach Anspruch 22 oder 23, **dadurch gekennzeichnet, daß** das Hydroxylaminsalz und/oder das Hydrazinsalz 0,02 - 0,1 Gewichtsprozent mit Bezug auf das Gesamtgewicht der wässrigen Behandlungslösung, die das Tensid enthält, darstellt bzw. darstellen.

25. Verfahren nach einem der vorangegangenen Ansprüche, **dadurch gekennzeichnet, daß** die wässrige Behandlungslösung, die das Tensid enthält, ein in Dispersion vorliegendes Pigment enthält.

26. Verfahren nach einen der vorangegangenen Ansprüche, **dadurch gekennzeichnet, daß** das Substrat ausgewählt ist unter den Polythiouretanen, den (meth)-allylischen Polymeren, den (meth)- acrylischen Polymeren und den thermoplastischen Polycarbonaten.

27. Verfahren nach einem der vorangegangenen Ansprüche, **dadurch gekennzeichnet, daß** die Beschichtung ein harter Antiabrasiver- oder Stoßschutzlack ist.

28. Verfahren nach Anspruch 27, **dadurch gekennzeichnet, daß** die Beschichtung auf Epoxysilanhydrolysat basiert.

29. Verfahren nach einem der vorangegangenen Ansprüche, **dadurch gekennzeichnet, daß** das Substrat eine Ophthalmische Linse ist.

30. Verfahren nach Anspruch 28, **dadurch gekennzeichnet, daß** die Linse ein Brillenglas ist.

31. Wässrige Behandlungslösung, **dadurch gekennzeichnet, daß** sie umfaßt ein Tensid, ein hydrophiles Polymer und/oder einen hydrophilen colloidalen Mineralfüllstoff, ein Hydrazinund/oder Hydroxylaminsalz sowie eine Säure.

32. Wässrige Lösung nach Anspruch 31, **dadurch gekennzeichnet, daß** sie mit Bezug auf das Gesamtgewicht der Lösung umfaßt:
- 0,01 - 0,1 Prozent von zumindest einem Tensid;
- 0,001 - 0,5 Prozent des hydrophilen Polymers und/oder des colloidalen hydrophilen Mineralfüllstoffes;
- 0,02 - 0,1 Prozent eines Hydrazin- und/oder Hydroxylaminsalzes und;
- bis zu 0,01 Prozent an Säure.

33. Wässrige Behandlungslösung nach Anspruch 31 oder 32, **dadurch gekennzeichnet, daß** die Säure Milchsäure ist.

34. Wässrige Behandlungslösung nach einem der Ansprüche 31 - 32, **dadurch gekennzeichnet, daß** das Tensid ausgewählt ist unter den anionischen oder nicht-ionischen Tensiden.

35. Wässrige Behandlungslösung nach Anspruch 34, **dadurch gekennzeichnet, daß** das Tensid ausgewählt ist unter Natriumlaurylsulfat, Natriumlaurylethersulfat, Triethanolamin-laurylsulfat, Natriumdodecylbenzolsulfonat und PEG 9-Oktylphenylether.

36. Wässrige Behandlungslösung nach einem der Ansprüche 31 - 35, **dadurch gekennzeichnet, daß** das hydrophile Polymer ausgewählt ist unter den vinylischen Polyalkoholen, den Polyethylenglycolen, den Polyacrylamiden, den Poly(vinylpyrrolidonen) und den Cellulosederivaten.

37. Wässrige Lösung nach einem der Ansprüche 31 - 36, **dadurch gekennzeichnet, daß** der hydrophile colloidiale Mineralfüllstoff ausgewählt ist unter den pyrogenen Kieselerden, den pyrogenen Aluminiumoxiden und deren Mischungen.

38. Wässrige Behandlungslösung nach einem der Ansprüche 31 - 37, **dadurch gekennzeichnet, daß** das Hydroxylamin- und/oder Hydrazinsalz ein Chlorhydrat ist.

39. Wässrige Behandlungslösung nach einem der Ansprüche 31- 38, **dadurch gekennzeichnet, daß** es ein Pigment in Dispersion einschließt.

## Claims

1. Method for coating at least one surface of a substrate made of organic glass, **characterized in that** it comprises, prior to the deposition of the coating on the surface of the substrate, a treatment step comprising bringing the surface of the substrate into contact with an aqueous treatment solution comprising at least one surface-active agent having an acidic pH.

2. Method according to claim 1, **characterized in that** the pH of the aqueous treatment solution comprising the surface-active agent varies from 2 to 5.

3. Method according to claim 1 or 2, **characterized in that** the pH of the aqueous treatment solution comprising the surface-active agent is adjusted by addition of lactic acid.

4. Method according to claim 3, **characterized in that** the amount of lactic acid present in the aqueous treatment solution comprising the surface-active agent is from 0 to 0.01% by weight based on the total weight of the solution.

5. Method according to any one of the previous claims, **characterized in that** it comprises, subsequent to the step of treatment with the aqueous solution of surface-active agent, a step of treatment of the surface with a basic solution.

6. Method according to claim 5, **characterized in that** the basic solution is a 5% aqueous sodium hydroxide solution.

7. Method according to claim 5 or 6, **characterized in that** it comprises, subsequent to the step of treatment with the solution comprising the surface-active agent and prior to the step of treatment with the basic solution, a rinsing step, in order to remove the excess solution comprising the surface-active agent.

8. Method according to claim 7, **characterized in that** the rinsing step is a step of rinsing with deionized water.

9. Method according to any one of the previous claims, **characterized in that** it comprises, prior to the step of treatment with the aqueous solution of surface-active agent, a step of pre-treatment with plasma.

10. Method according to any one of the previous claims, **characterized in that** the surface-active agent is selected from anionic or nonionic surfactants.

11. Method according to claim 10, **characterized in that** the surface-active agent is selected from sodium lauryl sulphate, sodium lauryl ether sulphate, triethanolamine lauryl sulphate, sodium dodecylbenzenesulphonate and PEG-9 octylphenyl ether.

12. Method according to any one of claims 1 to 10, **characterized in that** the surface-active agent is sodium lauryl ether sulphate.

13. Method according to any one of the previous claims, **characterized in that** the surface-active agent represents 0.01 to 0.1% by weight based on the total weight of the aqueous treatment solution.

14. Method according to any one of the previous claims, **characterized in that** the aqueous treatment solution comprising at least a surface-active agent comprises a hydrophilic polymer, or a hydrophilic colloidal inorganic filler or a mixture thereof.

15. Method according to claim 14, **characterized in that** the hydrophilic polymer is selected from poly(vinyl alcohol)s, poly(ethylene glycol)s, polyacrylamides, polyvinylpyrrolidones and cellulose derivatives.

16. Method according to claim 15, **characterized in that** the cellulose derivatives are selected from hydroxy alkyl celluloses, alkyl hydroxy alkyl celluloses and carboxy alkyl celluloses.

17. Method according to claim 16, **characterized in that** the cellulose derivative is a hydroxy ethyl cellulose, a hydroxy propyl cellulose, a methyl hydroxy propyl cellulose or a carboxy methyl cellulose.

18. Method according to any one of claims 14 to 17, **characterized in that** the hydrophilic colloidal inorganic filler is selected from pyrogenic silicas, pyrogenic aluminas and their mixtures.

19. Method according to claim 14, **characterized in that** the surface-active agent is an anionic surfactant and the inorganic filler is a nonionic colloidal inorganic filler.

20. Method according to any one of claims 14 to 19, **characterized in that** the hydrophilic polymer and/or the colloidal inorganic filler represent 0.001 to 0.05%, by weight based on the total weight of the aqueous treatment solution comprising the surface-active agent.

21. Method according to claim 20, **characterized in that** the hydrophilic polymer and/or the colloidal inorganic filler represent 0.005 to 0.02% by weight.

22. Method according to any one of the previous claims, **characterized in that** the aqueous treatment solution comprising the surface-active agent comprises a hydroxylamine salt and/or a hydrazine salt.

23. Method according to claim 22, **characterized in that** the hydroxylamine salt and/or the hydrazine salt is a hydrochloride.

24. Method according to claim 22 or 23, **characterized in that** the hydroxylamine salt and/or the hydrazine salt represent 0.02 to 0.1% by weight based on the total weight of the aqueous treatment solution comprising the surface-active agent.

25. Method according to any one of the previous claims, **characterized in that** the aqueous treatment solution comprising the surface-active agent comprises a dispersed pigment.

26. Method according to any one of the previous claims, **characterized in that** the substrate is selected from polythiourethanes, (meth)allyl polymers, (meth)acrylic polymers and thermoplastic polycarbonates.

27. Method according to any one of the previous claims, **characterized in that** the coating is a hard abrasion-resistant or impact-resistant varnish.

28. Method according to claim 27, **characterized in that** the coating is based on epoxysilane hydrolysate.

29. Method according to any one of the previous claims, **characterized in that** the substrate is an ophthalmic lens.

30. Method according to claim 29, **characterized in that** the lens is a spectacle glass.

31. Aqueous treatment solution, **characterized in that** it comprises a surface-active agent, a hydrophilic polymer and/or a hydrophilic colloidal inorganic filler, a hydrazine salt and/or a hydroxylamine salt, and an acid.

32. Aqueous solution according to claim 31, **characterized in that** it comprises, based on the total weight of the solution:
- 0.01 to 0.1 % of at least one surface-active agent;
- 0.001 to 0.05% of the hydrophilic polymer and/or of the hydrophilic colloidal inorganic filler;
- 0.02 to 0.1 % of a hydrazine salt and/or a hydroxylamine salt; and
- up to 0.01 % of acid.

33. Aqueous treatment solution according to claim 31 or 32, **characterized in that** the acid is lactic acid.

34. Aqueous treatment solution according to any one of claims 31 to 32, **characterized in that** the surface-active agent is selected from anionic or nonionic surfactants.

35. Aqueous treatment solution according to claim 34, **characterized in that** the surface-active agent is selected from sodium lauryl sulphate, sodium lauryl ether sulphate, triethanolamine lauryl sulphate, sodium dodecylbenzenesulphonate and PEG-9 octylphenyl ether.

36. Aqueous treatment solution according to any one of claims 31 to 35, **characterized in that** the hydrophilic polymer is selected from poly(vinyl alcohol)s, poly(ethylene glycol)s, polyacrylamides, polyvinyl-pyrrolidones and cellulose derivatives.

37. Aqueous solution according to any one of claims 31 to 36, **characterized in that** the hydrophilic colloidal inorganic filler is selected from pyrogenic silicas, pyrogenic aluminas and their mixtures.

38. Aqueous treatment solution according to any one of claims 31 to 37, **characterized in that** the hydroxylamine salt and/or the hydrazine salt is a hydrochloride.

39. Aqueous treatment solution according to any one of claims 31 to 38, **characterized in that** it comprises a dispersed pigment.
